(19) Europäisches Patentamt
European Patent Office
Office européen des brevets

(11) Veröffentlichungsnummer : **0 040 790**
**B2**

(12) # NEUE EUROPÄISCHE PATENTSCHRIFT

(45) Veröffentlichungstag der neuen Patentschrift : **10.02.88**

(51) Int. Cl.[4] : **C 09 B 62/04**, C 09 B 62/503, D 06 P 3/66, D 06 P 3/10

(21) Anmeldenummer : **81103828.0**

(22) Anmeldetag : **19.05.81**

(54) **Verfahren zum Färben und Bedrucken von Hydroxy- und/oder Carbonamidgruppen enthaltenden Fasermaterialien.**

(30) Priorität : **24.05.80 DE 3019960**

(43) Veröffentlichungstag der Anmeldung : **02.12.81 Patentblatt 81/48**

(45) Bekanntmachung des Hinweises auf die Patenterteilung : **13.02.85 Patentblatt 85/07**

(45) Bekanntmachung des Hinweises auf die Entscheidung über den Einspruch : **10.02.88 Patentblatt 88/06**

(84) Benannte Vertragsstaaten :
**CH DE FR GB IT LI**

(56) Entgegenhaltungen :
**EP-A- 0 040 806**
**DE-A- 2 154 247**
**DE-A- 2 748 929**
**DE-A- 2 748 965**
**DE-A- 2 748 975**
**DE-A- 2 927 102**
**DE-B- 2 614 550**
**DE-C- 1 265 698**
**DE-C- 1 644 208**
**JP-A-38 023 287**
**CHEMICAL ABSTRACTS, Band 78, Nr. 24, 18. Juni 1973, Seite 52, Zusammenfassung 148950r, Columbus, Ohio, US**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Meininger, Fritz, Dr.**
**Loreleistrasse 7**
**D-6230 Frankfurt am Main 80 (DE)**
Erfinder : **Otten, Joachim, Dr.**
*
**(verstorben am 03.12.1980) (DE)**

**EP 0 040 790 B2**

**Beschreibung**

Die Erfindung liegt auf dem technischen Gebiet der Anwendung von faserreaktiven Farbstoffen zum Färben von Fasermaterialien.

Aus der deutschen Patentschrift 1 265 698 und der deutschen Offenlegungsschrift 2 927 102 sind Farbstoffe bekannt, die einen faserreaktiven Rest aus der Vinylsulfonreihe und als einen weiteren faserreaktiven Rest einen Monohalogen-triazinyl-Rest enthalten ; sie werden in Färbeverfahren zum Färben von beispielsweise hydroxygruppenhaltigem Fasermaterial eingesetzt. Die Anwendung dieser Farbstoffe in Färbeverfahren ist jedoch mit gewissen Mängeln verbunden.

Mit der vorliegenden Erfindung wurde nunmehr ein Verfahren zum Färben von Bedrucken von Hydroxy- und/oder Carbonamidgruppen enthaltenden Fasermaterialien gefunden, das zu echten Färbungen und Drucken führt, das dadurch gekennzeichnet ist, daß man als Farbstoff einen wasserlöslichen Farbstoff auf das Fasermaterial aufbringt, der eine oder mehrere Gruppierungen aus der Gruppe der Formeln (1 a), (1 b) und (1 c)

$$—SO_2—CH = CH_2 \qquad (1\ a)$$

$$—SO_2—CH_2—CH_2—Hal \qquad (1\ b)$$

$$—SO_2—CH_2—CH_2—A \qquad (1\ c)$$

(in welchen Hal für ein Halogenatom und A für den Acyloxyrest einer ein- oder mehrbasischen Säure steht) und einen 6-Fluor-1,3,5-triazin-2-ylamino-Rest enthält, wobei der in 4-Stellung befindliche Substituent jedoch kein N-Phenylamino- oder N-Naphthylamino-Substituent ist, an dessen gegebenenfalls substituiertem Phenyl- oder gegebenenfalls substituiertem Naphthylrest eine Gruppe der obengenannten Formeln (1) gebunden steht, oder dessen in 4-Stellung befindlicher Substituent vorzugsweise kein Aminosubstituent mit einem gegebenenfalls substituierten Benzol- oder Naphthalinrest ist, der eine Gruppe der obengenannten Formeln (1) gebunden enthält, und dessen in 4-Stellung befindlicher Substituent kein Amino-Substituent mit einer Azogruppe ist, sowie mindestens eine Sulfonsäuregruppe besitzt, ausgenommen jedoch Farbstoffe des Europäischen Patentes Nr. 0 040 806 und sodann diesen Farbstoff bei gewöhnlicher oder erhöhter Temperatur, gegebenenfalls in Gegenwart alkalisch wirkender Mittel, auf dem Fasermaterial fixiert.

In Formel (1 b) ist Hal bevorzugt ein Chloratom. Ein- oder mehrbasische Säuren des Acyloxyrestes A sind beispielsweise Schwefelsäure, Thioschwefelsäure, Phosphorsäure, Essigsäure, Propionsäure, Benzolsulfonsäure, die Toluolsulfonsäuren, Benzoesäuren und Sulfobenzoesäuren. Bevorzugt steht A für den Sulfato-, Thiosulfato-, Phosphato- oder Acetoxyrest.

Der Monofluor-triazinylamino-Rest ist bevorzugt ein Rest der Formel (2)

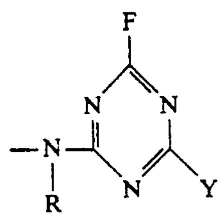

(2)

in welcher bedeuten :

R ist ein Wasserstoffatom oder eine Alkylgruppe von 1-4 C-Atomen, wie eine Methyl- oder Äthylgruppe ;

Y ist ein Rest der Formel (3 a), (3 b) oder (3 c)

$$—O—R^1 \qquad (3\ a)$$

$$—S—R^1 \qquad (3\ b)$$

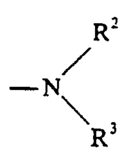

(3 c)

in welchen

$R^1$ für einen gegebenenfalls substituierten Alkylrest von 1 bis 4 C-Atomen oder für einen gegebenenfalls substituierten aromatischen, carbocyclischen oder aromatischen heterocyclischen Rest steht,

$R^2$ Ein Wasserstoffatom oder ein gegebenenfalls substituierter niederer aliphatischer Rest oder ein cycloaliphatischer Rest ist und

$R^3$ ein gegebenenfalls substituierter niederer, aliphatischer Rest oder ein gegebenenfalls substituierter aromatischer carbocyclischer Rest, der jedoch keine Azogruppe oder keine Gruppe der Formel (1 a), (1 b) oder (1 c), falls er ein Phenyl- oder Naphthylrest ist, gebunden enthält, oder eine niedere Alkoxygruppe, eine Cyangruppe, eine Gruppe der Formel $—CS—NH_2$ oder eine gegebenenfalls substituierte Aminogruppe bedeutet.

Niedere aliphatische Reste sind insbesondere niedere Alkyl- und Alkenylreste.

Die in den obigen Definitionen verwendete Angabe « niedere » bedeutet hier wie im folgenden, daß der in der Gruppe enthaltene Alkyl- oder Alkylen- oder Alkenylrest aus 1 bis 4 C-Atomen besteht.

Substituierte niedere Alkylreste sind beispielsweise Alkylgruppen von 1 bis 4 C-Atomen, die durch einen oder zwei Substituenten aus der Gruppe Acetylamino, Hydroxy, Sulfato, β-Sulfatoäthylsulfonyl, β-Thiosulfatoäthylsulfonyl, niederes Alkoxy, Sulfo, Carboxy, Phenyl, Naphthyl, durch Sulfo, Carboxy, β-Sulfatoäthylsulfonyl, β-Thiosulfatoäthylsulfonyl, Methyl, Äthyl, Methoxy, Äthoxy, Chlor, Sulfamoyl und/oder Carbamoyl substituiertes Phenyl und durch Sulfo, Carboxy, β-Sulfatoäthylsulfonyl, β-Thiosulfatoäthylsulfonyl, Sulfamoyl und/oder Carbamoyl substituiertes Naphthyl substituiert sind.

Ein cycloaliphatischer Rest ist beispielsweise der Cyclohexylrest.

Aromatische carbocyclische Reste sind vorzugsweise der Phenyl- und der Naphthylrest ; diese können beispielsweise durch Substituenten aus der Gruppe, Carboxy, Sulfo, niederes Alkyl, niederes Alkoxy, Hydroxy, Chlor und β-Sulfatoäthylsulfonyl substituiert sein.

Gegebenenfalls substituierte Aminogruppen, die für den Formelrest $R^3$ stehen können, sind beispielsweise die Aminogruppe selbst, eine niedere Alkylamino-, eine Dialkylaminogruppe mit jeweils niederen Alkylresten, eine N-Methyl-N-phenylaminogruppe oder die Phenylaminogruppe oder eine im Phenylrest durch Substituenten aus der Gruppe Sulfo, Carboxy, Chlor, niederes Alkyl und niederes Alkoxy substituierte Phenylaminogruppe.

Als in das erfindungsgemäße Verfahren einsetzbare Farbstoffe der genannten Art kommen solche der verschiedensten Farbstoffklassen in Betracht, wie Monoazofarbstoffe, Disazofarbstoffe, Trisazofarbstoffe sowie deren Metallkomplexverbindungen, wie die des Kupfers, Kobalts, Chroms und Nickels, des weiteren Anthrachinonfarbstoffe, Phthalocyaninfarbstoffe, die metallfrei oder ein Metall komplex gebunden enthalten können, wie die Kupfer- und Nickelphthalocyaninfarbstoffe, metallfreie oder metallhaltige Formazanfarbstoffe, wie Kupferformazanfarbstoffe, Dioxazin-, Azin-, Nitro- und Stilbenfarbstoffe.

Bevorzugt wird das erfindungsgemäße Verfahren mit solchen erfindungsgemäß anwendbaren Farbstoffen der genannten Art durchgeführt, die der Klasse der Monoazofarbstoffe, der Klasse der Kupfer-, Kobalt- und Chromkomplex-Monoazofarbstoffe, der Klasse der Anthrachinonfarbstoffe, der Klasse der Kupferphthalocyanin- und Nickelphthalocyaninfarbstoffe sowie der Kupferformazanfarbstoffe angehören.

Die erfindungsgemäß einsetzbaren Farbstoffe können z. B. folgendermaßen hergestellt werden : Man setzt zunächst 1 Mol Cyanurfluorid primär mit einem Mol einer Verbindung der Formel (4 a), (4 b) oder vorzugsweise (4 c)

$$H—O—R^1 \qquad (4\,a)$$

$$H—S—R^1 \qquad (4\,b)$$

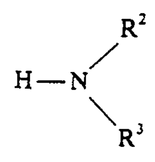

(4 c)

in welchen $R^1$, $R^2$ und $R^3$ die obengenannten Bedeutungen haben, um ; die so hergestellte Verbindung wird sodann sekundär mit einem Mol eines Farbstoffmoleküles umgesetzt, das eine acylierbare Aminogruppe und mindestens eine Gruppe aus den obigen Formeln (1 a), (1 b) und (1 c) enthält. Soweit es sich um Azofarbstoffe handelt, kann man auch das primäre Kondensationsprodukt sekundär mit einem Mol einer Diazo- oder Kupplungskomponente, die eine für die Diazotierung bzw. Kupplung nicht benötigte acylierbare Aminogruppe enthält, umsetzen und anschließend durch Azokupplung die entsprechenden Azofarbstoffe herstellen, wobei man die Komponenten so auswählt, daß der fertige Farbstoff wenigstens einmal eine Gruppe der Formel (1 a), (1 b) oder (1 c) und (2) enthält.

Die Kondensation der Komponenten mit Cyanurfluorid kann auch in umgekehrter Reihenfolge ausgeführt werden. Es ist auch möglich, die genannten primären Kondensationsprodukte aus Cyanurfluorid und Verbindungen der Formeln (4 a), (4 b) oder (4 c) mit Aminogruppen enthaltenden Farbstoffmolekülen zu kondensieren, die bereits eine Gruppierung der Formel (1 a), (1 b) oder (1 c) enthalten. Liegen

in den hergestellten Farbstoffen zur Metallkomplexbildung befähigte Gruppierungen vor, können die Farbstoffe auch nachträglich metallisiert werden.

Mit den hier geschilderten Verfahrensweisen zur Herstellung der in das erfindungsgemäße Verfahren einsetzbaren Farbstoffe sind die Synthesemöglichkeiten für diese Farbstoffe nicht erschöpft. Im Prinzip lassen sich diese Farbstoffe sämtlicher Farbstoffklassen analog bekannten Verfahrensweisen herstellen, indem man in an und für sich bekannter oder analoger Weise zu bekannten Verfahrensweisen von Vorprodukten oder Zwischenprodukten für solche Farbstoffe ausgeht, die solche faserreaktiven Reste der Formel (1) und/oder (2) enthalten oder diese faserreaktiven Reste in hierfür geeignete Vorprodukte oder Zwischenprodukte, die gegebenenfalls bereits Farbstoffcharakter besitzen, einführt.

Das erfindungsgemäße Verfahren dient zur Herstellung von Färbungen (einschließlich Drucken) von Hydroxy- und Carbonamidgruppen enthaltenden Fasermaterialien aller Art. Solche Fasermaterialien sind beispielsweise die natürliche Cellulosefaser, wie Baumwolle, Leinen und Hanf, sowie regenerierte Cellulose. Das erfindungsgemäße Verfahren ist in gleicher Weise zum Färben von hydroxygruppenhaltigen Fasern geeignet, die in Mischgeweben enthalten sind, wie beispielsweise von Gemischen aus Baumwolle mit Polyesterfasern oder Polyamidfasern.

Die erfindungsgemäß verwendeten Farbstoffe lassen sich auf verschiedene Weise auf das Fasermaterial applizieren und auf der Faser fixieren, insbesondere in Form von Farbstofflösungen und -druckpasten.

Die den Farbstoff und das säurebindende Mittel enthaltenden Färbeflotten und Druckpasten können innerhalb eines breiten Temperaturbereiches auf das zu färbende Material aufgebracht werden, vorzugsweise bei Raumtemperatur (15 bis 30 °C) oder bei Temperaturen bis zu 60 °C. Hierbei geht man zweckmäßigerweise so vor, daß man das Fasergut mit den Färbeflotten, die gegebenenfalls neutrale Salze enthalten, imprägniert und abquetscht, beispielsweise auf üblichem Wege foulardiert, und es gegebenenfalls nach vorhergehender Zwischentrocknung zwecks Fixierung der Farbstoffe einer Hitzebehandlung unterwirft. In ähnlicher Weise erzeugt man Drucke, indem man das Fasermaterial mit den genannten Druckpasten bedruckt, zwischentrocknet und es zur Fixierung der Farbstoffe einer Hitzebehandlung unterwirft. In Abhängigkeit von der Konzentration und der Art des säurebindenden Mittels ist es aber auch möglich, die Fixierung der Farbstoffe beispielsweise bei 20 bis 60 °C durch mehrstündiges Liegenlassen des imprägnierten oder bedruckten, feuchten Fasergutes bei Raumtemperatur oder bei erhöhter Temperatur durchzuführen (sog. Klotz-Verweilverfahren).

Die Fixierung der Färbungen und Drucke im alkalischen Bereich durch Hitzebehandlung kann nach verschiedenen, in der Technik üblichen Methoden erfolgen, beispielsweise durch Dämpfen mit Sattdampf bei ca. 100 bis 103 °C oder mit überhitztem Wasserdampf bei Temperaturen bis 150 °C, mit Heißluft bei Temperaturen von 120 bis 230 °C (Thermofixieren), durch Infrarotbestrahlung, durch Hindurchführen durch heiße, stark salzhaltige Lösungen, durch heiße Dämpfe indifferenter organischer Lösungsmittel oder durch Hinüberleiten der geklotzten oder bedruckten Stoffbahn über eine Reihe beheizter Walzen.

Zur Durchführung des erfindungsgemäßen Verfahrens im alkalischen pH-Bereich werden als säurebindende Mittel beispielsweise Natriumhydroxyd, Kaliumhydroxyd oder ein Alkalisalz einer schwachen Säure, wie Natriumcarbonat doder -bicarbonat, Trinatriumphosphat, Dinatriumphosphat, Natriummetasilikat oder trichloressigsaures Natrium oder Mischungen aus diesen säurebindenden Mitteln verwendet.

Das säurebindende Mittel kann aber auch vor oder nach der Applikation der Färbeflotten oder Druckpasten, die dann dieses Mittel nicht enthalten, auf das Fasermaterial aufgebracht werden, beispielsweise durch Aufsprühen oder Klotzen einer wäßrigen Lösung des Mittels. Die Lösungen dieser Mittel können auch allgemein übliche Zusätze enthalten, wie sie beispielsweise oben bereits genannt wurden. Werden diese Mittel gleichzeitig mit dem Farbstoff auf das zu färbende Material appliziert, so ist es zweckmäßig, sie in der Färbeflotte oder in der den Farbstoff enthaltenden Druckpaste zu lösen.

Die Färbeflotten und Druckpasten können die allgemein üblichen Zusätze enthalten, die Lösungen beispielsweise anorganische Salze, wie Alkalichloride oder Alkalisulfate, Harnstoff, Alginatverdickungen, wasserlösliche Cellulosealkyläther sowie Dispergierungs- und Egalisierhilfsmittel, die Druckpasten beispielsweise Harnstoff, Natrium-m-nitrobenzolsulfonat und die üblichen Verdickungsmittel, wie Methylcellulose, Stärkeäther, Emulsionsverdickungen oder vorzugsweise ein Alginat, z. B. Natriumalginat.

Bei Verwendung praktisch neutraler, keine alkalische Mittel enthaltender Färbeflotten oder Druckpasten geht man zur Fixierung vorteilhaft so vor, daß man die gefärbte Ware in ein salzhaltiges, das säurebindende oder alkalispendende Mittel enthaltende Bad einbringt und nach dem Abquetschen und gegebenenfalls einer Zwischentrocknung der Hitzebehandlung unterwirft.

Bevorzugt von diesen Verfahrensweisen des erfindungsgemäßen Verfahrens ist das erwähnte Klotz-Verweilverfahren, insbesondere bei einer Verweiltemperatur von 20-25 °C und der Verwendung von Natriumcarbonat, tertiärem Natriumphosphat, Natriumhydroxid (Natronlauge) oder Gemische dieser als säurebindende Mittel.

Führt man das erfindungsgemäße Verfahren nach der Direktfärbemethode (Ausziehverfahren) aus, so wird es bevorzugt im alkalischen Bereich durchgeführt. Die hierfür gewählten Temperaturen liegen zwischen 30 und 80 °C. Das Färbebad enthält dabei ein oder mehrere der obengenannten säurebindenden Mittel und die gegebenenfalls üblichen Zusätze, wie anorganische Salze, Harnstoff und andere der obengenannten Hilfsmittel. Das Ausziehverfahren ist eine bevorzugte Variante des erfindungsgemäßen

Verfahrens. Die Färbetemperatur liegt bevorzugt bei 40-60 °C, und bevorzugt verwendet man als säurebindendes Mittel Natriumcarbonat oder Natriumhydroxid (Natronlauge) oder beide gleichzeitig.

Das erfindungsgemäße Verfahren dient auch zur Herstellung von Färbungen auf Carbonamidgruppen enthaltenden Fasermaterialien aller Art. Solche Fasermaterialien sind beispielsweise natürliche und synthetische Polyamidfasern, insbesondere Wolle. Das erfindungsgemäße Verfahren ist in gleicher Weise zum Färben von Carbonamidgruppen enthaltenden Fasern geeignet, die in Mischgeweben enthalten sind, wie beispielsweise Gemischen aus Wolle mit Polyesterfasern oder Polyamidfasern. Diese Fasermaterialien werden mit den erfindungsgemäß zur Anwendung kommenden reaktiven Farbstoffen nach den hierfür üblichen Färbe- und Druckmethoden in saurem bis neutralem pH-Bereich gefärbt bzw. bedruckt, wobei gegebenenfalls eine abschließende Erhöhung des pH-Wertes auf etwa 6,5 bis 8,5 vorteilhaft sein kann.

Die mit den erfindungsgemäß zur Anwendung gelangenden Farbstoffen hergestellten Färbungen und Drucke zeichnen sich durch klare Nuancen aus. Insbesondere besitzen die Färbungen und Drucke auf Cellulosefasermaterialien eine hohe Farbstärke, darüber hinaus eine gute Lichtechtheit und sehr gute Naßechtheitseigenschaften, wie Wasch-, Wasser-, Seewasser-, Überfärbe- und Schweißechtheiten, desweiteren eine gute Plissierechtheit, Bügelechtheit und Reibechtheit.

Die nachfolgenden Beispiele dienen zur Erläuterung der Erfindung. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

## Beispiel 1

Es wird ein Färbebad hergestellt, das in 1 000 Volumenteilen 10 Teile des Farbstoffes der Formel (als freie Säure geschrieben)

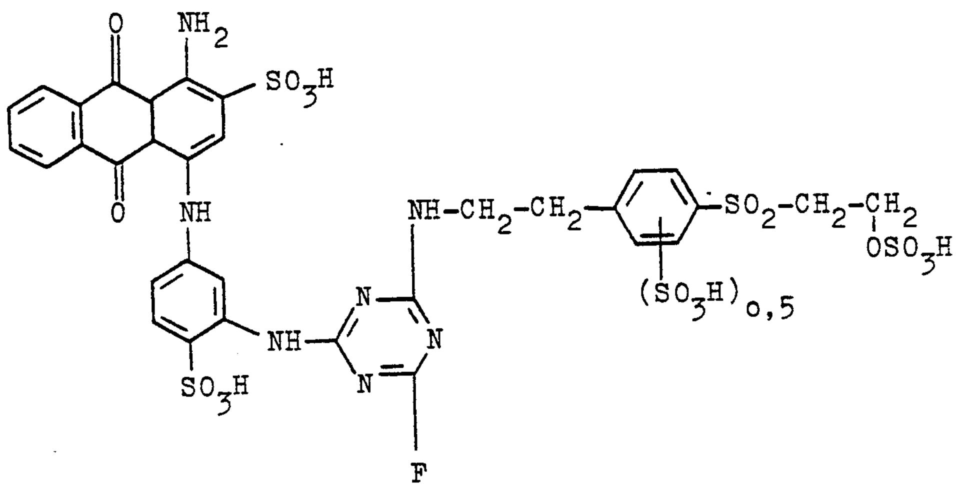

75 Teile Natriumsulfat, 7 Teile Natriumcarbonat und 16 Volumenteile einer 2N-Natronlauge enthält. 50 Teile eines Baumwollgarnes werden zugegeben, das im Bad 5 Minuten bei 20 °C bewegt wird ; das Bad wird sodann in 25 bis 30 Minuten auf 60 °C erhitzt und die Färbung bei dieser Temperatur unter guter Bewegung des Bades eine Stunde weitergeführt.

Die Färbung wird abgesäuert, kalt und dann heiß gespült, kochend geseift, gespült und getrocknet. Man erhält eine kräftige blaue Färbung mit sehr guten Echtheitseigenschaften.

## Beispiel 2

15 Teile des Formazanfarbstoffes der Formel (in Form der freien Säure geschrieben)

(Siehe Formel Seite 6 f.)

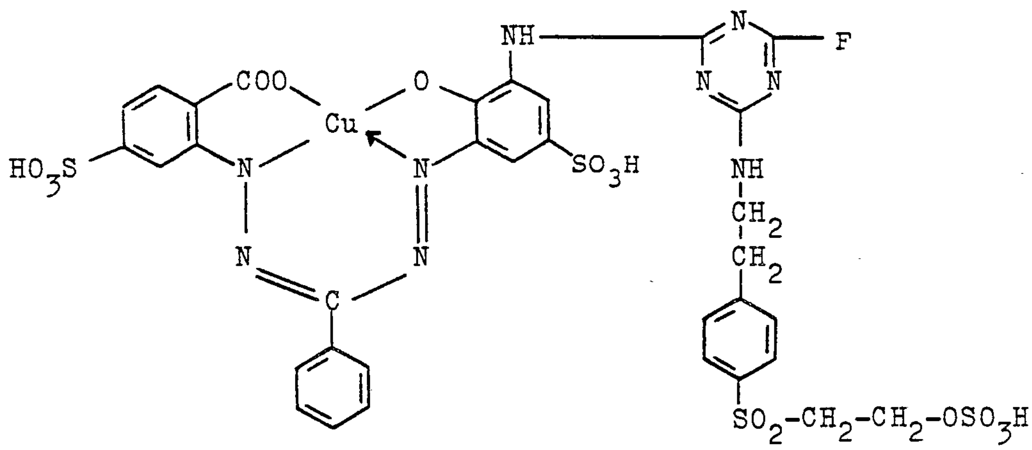

werden mit 50 Teilen Harnstoff in 200 Teilen heißem Wasser gelöst und mit 400 Teilen einer Natriumalginatverdickung, bestehend auf 40 Teilen Natriumalginat und 960 Teilen Wasser, versetzt. Dann gibt man 25 Teile Natriumcarbonat hinzu und stellt mit Wasser und Verdickung auf 1 000 Teile ein.

Mit der so hergestellten Druckpaste wird ein Baumwollgewebe bedruckt, nach dem Trocknen 5 Minuten bei 101 bis 103 °C gedämpft, kalt und dann heiß mit Wasser gespült, kochend geseift, wieder gespült und getrocknet. Man erhält einen klaren blauen Druck mit sehr guten Echtheitseigenschaften.

Beispiele 3 bis 5

In ähnlicher Weise, wie in den vorhergehenden Beispielen beschrieben, erhält man mit den in der folgenden Tabelle angegebenen Farbstoffen Färbungen und Drucke, die gute Echtheitseigenschaften und die in der Tabelle angegebenen Farbtöne aufweisen.

| Bsp. | Strukturformel des Farbstoffes | Farbton |
|---|---|---|
| 3 | 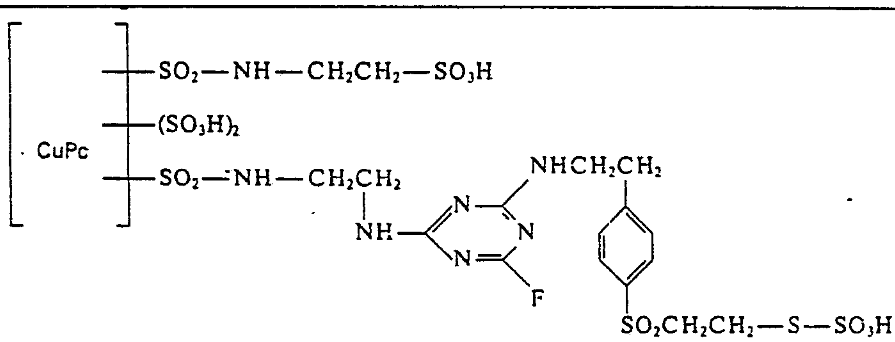 | türkisblau |
| 4 | 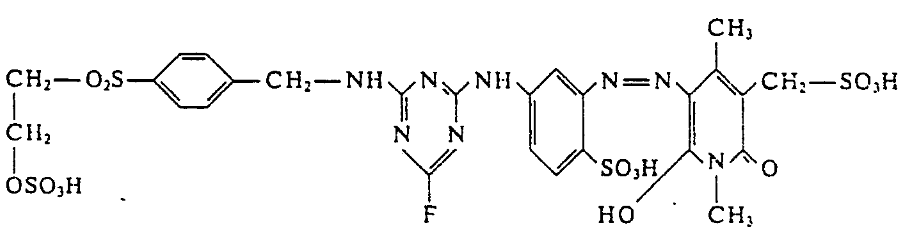 | Gelb |
| 5 | 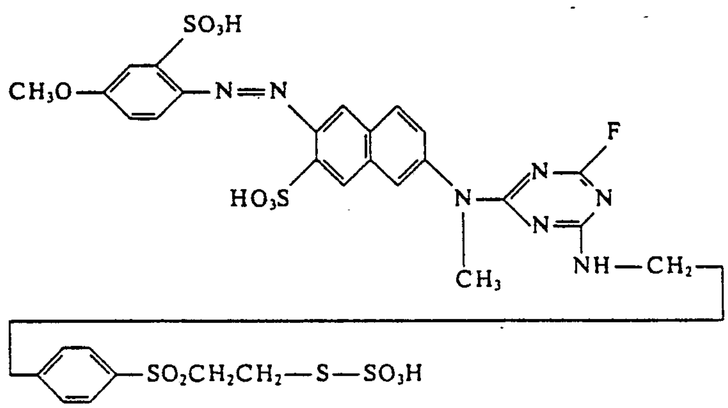 | scharlach |

**Patentansprüche**

1. Verfahren zum Färben oder Bedrucken von Hydroxy- und/oder Carbonamidgruppen enthaltenden Fasermaterialien, dadurch gekennzeichnet, daß man als Farbstoff einen wasserlöslichen Farbstoff auf das Fasermaterial aufbringt, der eine oder mehrere Gruppierungen aus der Gruppe der Formeln (1 a), (1 b) und (1 c)

$$-SO_2-CH=CH_2 \quad (1\,a)$$
$$-SO_2-CH_2-CH_2-Hal \quad (1\,b)$$
$$-SO_2-CH_2-CH_2-A \quad (1\,c)$$

(in welchen Hal für ein Halogenatom und A für den Acyloxyrest einer ein- oder mehrbasischen Säure steht) und einen 6-Fluor-1,3,5-triazin-2-ylamino-Rest enthält, wobei der in 4-Stellung befindliche Substituent kein N-Phenylamino- oder N-Naphthylamino-Substituent, an dessen gegebenenfalls substituiertem Phenyl- oder gegebenenfalls substituiertem Naphthylrest eine Gruppe der obengenannten Formeln (1) gebunden steht, und kein Amino-Substituent mit einer Azogruppe ist, sowie mindestens eine Sulfonsäuregruppe besitzt, ausgenommen jedoch Farbstoffe des Europäischen Patentes Nr. 0 040 806, und sodann diesen Farbstoff bei gewöhnlicher oder erhöhter Temperatur, gegebenenfalls in Gegenwart alkalisch wirkender Mittel, auf dem Fasermaterial fixiert.

2. Verfahren nach Patentanspruch 1, dadurch gekennzeichnet, daß der auf das Fasermaterial aufgebrachte und darauf fixierte Farbstoff in 4-Stellung des angegebenen Triazinrestes keinen Substituenten besitzt, der ein Aminosubstituent mit einem gegebenenfalls substituierten Benzol- oder Naphthalinrest ist, der eine Gruppe der in Anspruch 1 genannten Formeln (1) gebunden enthält.

3. Verfahren nach Anspruch 1 oder 2, dadurch gekennzeichnet, daß der 6-Fluor-1,3,5-triazin-2-ylamino-Rest im verwendeten Farbstoff ein Rest der Formel (2)

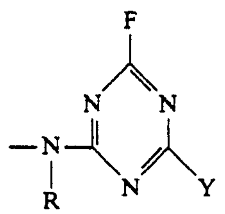

(2)

ist, in welcher R ein Wasserstoffatom oder eine Alkylgruppe von 1 bis 4 C-Atomen ist und Y ein Rest der Formel (3 c)

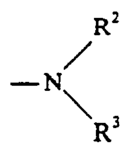

(3 c)

ist, in welcher

$R^2$ ein Wasserstoffatom oder ein gegebenenfalls substituierter niederer aliphatischer Rest oder ein cycloaliphatischer Rest ist und

$R^3$ ein substituierter niederer aliphatischer Rest ist, der eine Gruppe der in Anspruch 1 angegebenen Formel (1 a), (1 b) oder (1 c) gebunden enthält.

**Claims**

1. A process for dyeing or printing fibre materials containing hydroxy and/or carboxamide groups, characterized by applying to the fibre material, as a dyestuff, a water-soluble dyestuff containing at least one sulfonic acid group and containing one or more radicals selected from the group of the formulae (1 a), (1 b) and (1 c)

$$-SO_2-CH=CH_2 \quad (1\,a)$$
$$-SO_2-CH_2-CH_2-Hal \quad (1\,b)$$
$$-SO_2-CH_2-CH_2-A \quad (1\,c)$$

(in which Hal represents a halogen atom and A represents the acyloxy radical of a monobasic or polybasic

acid), and a 6-fluoro-1,3,5-triazin-2-ylamino radical with the proviso that the substituent located in the 4-position is not a N-phenylamino or N-naphthylamino substituent to the optionally substituted phenyl radical of which or to the optionally substituted naphthyl radical of which is bonded a group of the above-mentioned formulae (1), and is no amino substituent containing an azo group, however, with the exception of dyestuffs of the European Patent No. 0 040 806, and then fixing this dyestuff on the fibre material at room temperature or at an elevated temperature optionally in the presence of an agent having an alkaline reaction.

2. A process according to claim 1, characterized by that the dyestuff which has been applied to the fibre material and fixed thereon does not contain, in the 4-position of the above-mentioned triazine radical, a substituent which is an amino substituent having an optionally substituted benzene or naphthalene radical which contain a group of the formulae (1) mentioned in claim 1.

3. A process according to claim 1 or 2, characterized by that the 6-fluoro-1,3,5-triazin-2-ylamino radical in the dyestuff employed is a radical of the formula (2)

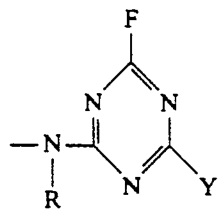

(2)

in which R is a hydrogen atom or an alkyl group of 1 to 4 C-atoms and Y is a radical of the formula (3 c)

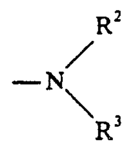

(3 c)

in which

$R^2$ is a hydrogen atom or an optionally substituted lower aliphatic radical or a cycloaliphatic radical and -

$R^3$ is a substituted lower aliphatic radical which contains a group of the formula (1 a), (1 b) or (1 c), mentioned in claim 1.

**Revendications**

1. Procédé pour teindre ou imprimer des matières fibreuses contenant des radicaux hydroxy et/ou des radicaux carbamoyles, procédé caractérisé en ce qu'on applique comme colorant sur la matière fibreuse un colorant soluble dans l'eau qui contient un ou plusieurs radicaux répondant à l'une des formules (1 a), (1 b) et (1 c) :

$$-SO_2-CH=CH_2 \quad (1\ a)$$
$$-SO_2-CH_2-CH_2-Hal \quad (1\ b)$$
$$-SO_2-CH_2-CH_2-A \quad (1\ c)$$

(dans lesquelles Hal représente un atome d'halogène et A un radical acyloxy provenant d'un monoacide ou d'un polyacide) et un radical fluoro-6 triazine-1,3,5yl-2 amino, le substituant occupant la position 4 n'étant ni un radical N-phénylamino ou N-naphtylamino portant, sur le phényle éventuellement substitué ou le naphtyle éventuellement substitué, un radical répondant à l'une des formules (1) précédentes, ni un radical amino renfermant un radical azo, ainsi qu'au moins un radical sulfo, le colorant en question n'étant cependant pas l'un de ceux du brevet européen 0 040 806, puis on fixe ce colorant sur la matière fibreuse, à la température ordinaire ou à température élevée, éventuellement en présence d'une substance ayant une action alcaline.

2. Procédé selon la revendication 1, caractérisé en ce que le substituant qui occupe la position 4 du radical triazinique dans le colorant appliqué sur la matière fibreuse et fixé sur celle-ci n'est pas un radical amino ayant un radical benzénique ou naphtalénique, éventuellement substitué, contenant un radical répondant à l'une des formules (1) citées à la revendication 1.

3. Procédé selon l'une des revendications 1 et 2, caractérisé en ce que le radical fluoro-6 triazine-1,3,5yl-2 amino contenu dans le colorant utilisé est un radical répondant à la formule (2)

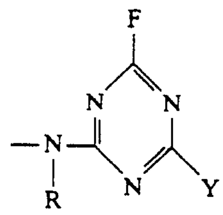

(2)

dans laquelle R représente un atome d'hydrogène ou un radical alkyle contenant de 1 à 4 atomes de carbone et Y représente un radical répondant à la formule 3 c :

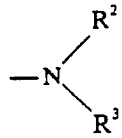

(3 c)

dans laquelle

$R^2$ représente un atome d'hydrogène, un radical aliphatique inférieur éventuellement substitué ou un radical cycloaliphatique et

$R^3$ représente un radical aliphatique inférieur substitué qui porte un radical répondant à l'une des formules (1 a), (1 b) et (1 c) représentées et définies à la revendication 1.